# DEMANDE DE BREVET EUROPEEN

(11) **EP 4 279 783 A1**
(43) Date de publication de la demande: **22.11.2023**
(21) Numéro de dépôt: 23173308.0
(22) Date de dépôt: 15.05.2023
(51) Int. Cl.: F16L 3/26, B25J 19/00, B25J 11/00, B05B 13/04, B05B 5/16, B05B 5/04, F16L 3/01

(54) **GUIDE DE CONFORMATION D'UN TUYAU, PULVÉRISATEUR DE PRODUIT DE REVÊTEMENT COMPRENANT UN TEL GUIDE ET INSTALLATION D'APPLICATION DE PRODUIT DE REVÊTEMENT COMPRENANT UN TEL PULVÉRISATEUR**

(30) Priorité: 16.05.2022 FR 2204622
(71) Demandeur: Exel Industries, 51200 Epernay (FR)
(72) Inventeur: TARANTINI, Joseph, 51200 EPERNAY (FR)
(74) Mandataire: Lavoix

(57) **Abrégé**

Ce guide de conformation (100) d'au moins un tuyau (96, 98) d'alimentation en produit fluide d'un organe de pulvérisation (88) appartenant à un pulvérisateur (8) de produit de revêtement est configuré pour être monté autour d'un corps central du pulvérisateur et comprend au moins une portion de maintien en forme de spirale pour le maintien en position d'un tronçon du tuyau d'alimentation, avec une géométrie prédéterminée, configurée pour assurer une isolation électrique entre une embouchure et un orifice de sortie du tuyau d'alimentation. Chaque portion de maintien (106, 116) présente, en coupe transversale, une forme intérieure concave configurée pour entourer le tronçon de tuyau (96, 98) sur plus de la moitié de sa circonférence, de préférence une forme en arc de cercle ou en U qui s'étend sur un secteur angulaire d'angle au sommet supérieur ou égal à 185°.

## Description

La présente invention concerne un guide de conformation d'au moins un tuyau d'alimentation en produit fluide d'un organe de pulvérisation appartenant à un pulvérisateur de produit de revêtement. La présente invention concerne également un pulvérisateur de produit de revêtement comprenant, entre autres, au moins un tuyau d'alimentation en produit en revêtement à pulvériser et/ou un produit de nettoyage, ainsi qu'un guide de conformation tel que mentionné ci-dessus. L'invention concerne enfin une installation d'application de produit de revêtement comprenant un tel pulvérisateur.

Dans le domaine de l'application de produit de revêtement sur des objets à revêtir, il est connu d'amener à un organe de pulvérisation d'un pulvérisateur un produit fluide, tel qu'un liquide, un mélange diphasique ou un mélange d'air et de poudre. Compte tenu de l'encombrement d'un pulvérisateur, ce tuyau, qui est le plus souvent flexible, doit être mis en place dans un espace restreint, à l'intérieur du pulvérisateur, en suivant un cheminement imposé, le plus souvent en forme de spirale, avec une longueur prédéterminée.

La mise en place d'un tel tuyau flexible au sein du pulvérisateur est une opération complexe qui requiert une main d'oeuvre qualifiée et dont la répétabilité entre deux pulvérisateurs d'une même gamme n'est pas assurée. Une telle mise en place doit également être effectuée lors d'une opération de maintenance, au cours de laquelle le tuyau doit être inspecté et/ou remplacé.

D'autre part, les points de connexion des extrémités du tuyau au sein du connecteur sont imposés par l'emplacement des raccords correspondants.

Sur toute la longueur du tuyau, le rayon de courbure minimum du tuyau doit conserver une valeur supérieure à une valeur de seuil et la section intérieure du tuyau doit conserver une aire suffisante, afin de ne pas gêner la circulation du fluide ou d'une navette, parfois appelée racleur, lorsqu'une telle navette est utilisée, par exemple conformément à l'enseignement technique de WO-A-2021/009046. En effet, dans ce cas, le tuyau est utilisé pour augmenter une distance d'isolation et le passage de la navette doit être garanti, sans blocage dû à un mauvais positionnement du tuyau. En particulier, le tuyau ne doit pas faire l'objet d'un pincement qui pourrait réduire localement l'aire de sa section intérieure.

US-A-2006/0272311 divulgue un guide pour un tuyau dans une configuration essentiellement rectiligne, avec des orifices de passage de tuyau alignés axialement. La géométrie de ce guide le rend incompatible avec un montage autour d'un corps central de pulvérisateur.

EP-A-0850693 enseigne de ménager sur l'extérieur du corps d'un pulvérisateur des nervures de guidage d'un tuyau d'alimentation d'un bol tournant en produit de revêtement. Ces nervures définissent des encoches à section carrée qui ne permettent pas de retenir en place le tuyau qui a tendance à se dilater radialement, au point qu'un capot doit être monté autour de ces nervures. Ce corps est une pièce de géométrie complexe, difficile à fabriquer.

US-A-2004/012292 et FR-A-3109323 divulguent, quant à eux, des dispositifs dans lesquels un tuyau est en appui sur une zone ondulée qui ne permet pas de retenir efficacement en place le tuyau, sauf à utiliser des agrafes qui risquent de réduire localement sa section de passage.

Ainsi, les matériels connus présentent des problèmes, à la fois en termes de fabrication, en termes de maintenance et en termes d'utilisation.

C'est à ces problèmes qu'entend plus particulièrement remédier l'invention en proposant un nouveau guide de conformation d'au moins un tuyau d'alimentation appartenant à un pulvérisateur, ce guide permettant un positionnement correct et répétable d'un pulvérisateur à l'autre, y compris après une opération de maintenance, et garantissant un écoulement sans encombre du fluide, voire d'une navette.

À effet, l'invention concerne un guide de conformation d'au moins un tuyau d'alimentation en produit fluide d'un organe de pulvérisation appartenant à un pulvérisateur de produit de revêtement, ce guide étant configuré pour être monté autour d'un corps du pulvérisateur et comprenant au moins une portion de maintien en forme de spirale pour le maintien en position d'un tronçon du tuyau d'alimentation, avec une géométrie prédéterminée, configurée pour assurer une isolation électrique entre une embouchure et un orifice de sortie du tuyau d'alimentation. En outre, chaque portion de maintien présente, en coupe transversale, une forme intérieure concave configurée pour entourer le tronçon de tuyau sur plus de la moitié de sa circonférence, de préférence une forme en arc de cercle ou en U qui s'étend sur un secteur angulaire d'angle au sommet supérieur ou égal à 185°

Grâce à l'invention, le guide de conformation permet d'assurer que le tuyau d'alimentation, qui est avantageusement flexible, conserve une géométrie globale qui ne gêne pas l'écoulement du fluide, notamment car les risques de pincement ou d'écrasement localisé du tuyau flexible sont éliminés, de même que le risque de créer une zone avec un rayon de courbure induisant une gêne à la circulation du fluide ou d'une éventuelle navette. En outre, la forme du guide de conformation, avec sa possibilité de montage autour du corps central du pulvérisateur favorise son intégration dans le pulvérisateur sans augmenter la longueur de ce dernier. La géométrie de la portion de maintien, avec une forme qui entoure le tuyau sur plus de la moitié de sa circonférence, garantit que le tuyau est maintenu en position dans cette portion, sans avoir recours à un couvercle ou à des moyens de bridage du tuyau sur le support. Ainsi, le support demeure facile à utiliser et le tuyau ne risque pas d'être déformé localement au point de créer une perte de charge intempestive ou de bloquer le passage d'une navette. Cette géométrie de la portion de maintien permet de mettre en place le tuyau en le faisant coulisser le long de cette portion, sans risque de le voir déborder radialement vers l'extérieur. Le montage du tuyau sur le guide de conformation peut ainsi avoir lieu de façon reproductible et relativement aisée.

Selon des aspects avantageux mais non obligatoires de l'invention, un tel guide de conformation peut incorporer une ou plusieurs des caractéristiques suivantes, prises selon toute combinaison techniquement admissible :
- Le guide comprend au moins deux portions de maintien en position de deux tronçons de tuyau distincts.
- Les deux portions de maintien sont centrées sur un axe commun.
- Le guide de conformation comprend des coudes d'entrée et de sortie qui permettent de faire passer un tuyau d'une orientation globalement parallèle à l'axe commun à une orientation globalement othoradiale à cet axe, ou l'inverse.
- Le guide comprend une bride de positionnement d'au moins un élément de sortie d'une portion de maintien en position.
- Le guide comprend une partie quasi-annulaire, qui s'étend selon un axe longitudinal et qui présente une fente longitudinale, alors que, en configuration de repos du guide de conformation, la partie quasi-annulaire entoure cet axe longitudinal sur strictement moins de 360° et sur au moins 330°, de préférence sur au moins 345°, de préférence encore sur au moins 351°.
- Le guide de conformation est réalisé par fabrication additive.
- Chaque portion de maintien comprend plusieurs spires.
- Chaque portion de maintien présente une longueur développée supérieure ou égale à 80 cm, de préférence supérieure ou égale à 100 cm.

Selon un autre aspect, l'invention concerne un pulvérisateur de produit de revêtement comprenant un organe de pulvérisation et au moins un tuyau d'alimentation de l'organe de pulvérisation en produit de revêtement à pulvériser et/ou en produit de nettoyage. Conformément à l'invention, ce pulvérisateur comprend un guide de conformation du tuyau tel que mentionné ci-dessus, alors qu'un tronçon du tuyau est engagé dans, et maintenu en position avec une géométrie déterminée par, la portion de maintien en position du guide de conformation.

Ce pulvérisateur est plus facile à fabriquer et à entretenir que ceux de l'art antérieur, avec moins de risque d'obstruction du tuyau d'alimentation.

Selon d'autres aspects avantageux mais non obligatoires de l'invention, un tel pulvérisateur peut incorporer une ou plusieurs des caractéristiques suivantes, prises selon toute combinaison techniquement admissible :
- Le pulvérisateur comprend un corps central et le guide de conformation est monté autour du corps central.
- Le guide de conformation est équipé d'au moins un relief de positionnement sur le corps central et/ou sur une autre partie du pulvérisateur.
- Le pulvérisateur est équipé d'une navette circulant dans le tuyau et la portion de maintien en position du tronçon du tuyau d'alimentation est configurée pour qu'un rayon de courbure du tuyau en place sur le guide soit, sur toute la longueur du tuyau, supérieur ou égal à un rayon de courbure minimal pour que la navette puisse circuler dans le tuyau.
- Un rapport entre, d'une part, une longueur du tuyau d'alimentation (entre des raccords de branchement de ce tuyau dans le pulvérisateur et, d'autre part, une distance, mesurée parallèlement à un axe longitudinal d'une partie d'un corps principal du pulvérisateur, entre les raccords, est strictement supérieur à 1, de préférence supérieur ou égal à 5, de préférence encore supérieur ou égal à 10.

Selon un troisième aspect, l'invention concerne une installation d'application de produit de revêtement incluant un pulvérisateur tel que mentionné ci-dessus.

Cette installation présente globalement les mêmes avantages que le pulvérisateur précité.

L'invention sera mieux comprise et d'autres avantages de celle-ci apparaitront plus clairement à la lumière de la description qui va suivre de deux modes de réalisation d'un guide de conformation, d'un pulvérisateur et d'une installation d'application de produit de revêtement conformes à son principe, donnée à titre d'exemple et faite en référence aux dessins annexés dans lesquels :
[Fig.1] La figure 1 est une représentation schématique de principe, en perspective, d'une installation d'application de produit de revêtement conforme à l'invention, incorporant un pulvérisateur et un guide de conformation également conformes à l'invention.
[Fig.2] La figure 2 est vue à plus grande échelle du détail Il à la figure 1 ;
[Fig.3] La figure 3 est une vue en perspective éclatée de deux éléments constitutifs du pulvérisateur représentés à la figure 1, dont un guide de conformation conforme à l'invention ;
[Fig.4] La figure 4 est une vue en perspective, selon un autre angle, du guide de conformation ;
[Fig.5] La figure 5 est une vue en perspective, selon encore un autre angle, du guide de conformation ; et
[Fig.6] La figure 6 représente, sur deux inserts A) et B) et à plus petite échelle que les figures 4 et 5, un guide de conformation conforme à un deuxième mode de réalisation de l'invention, vu selon deux angles différents.

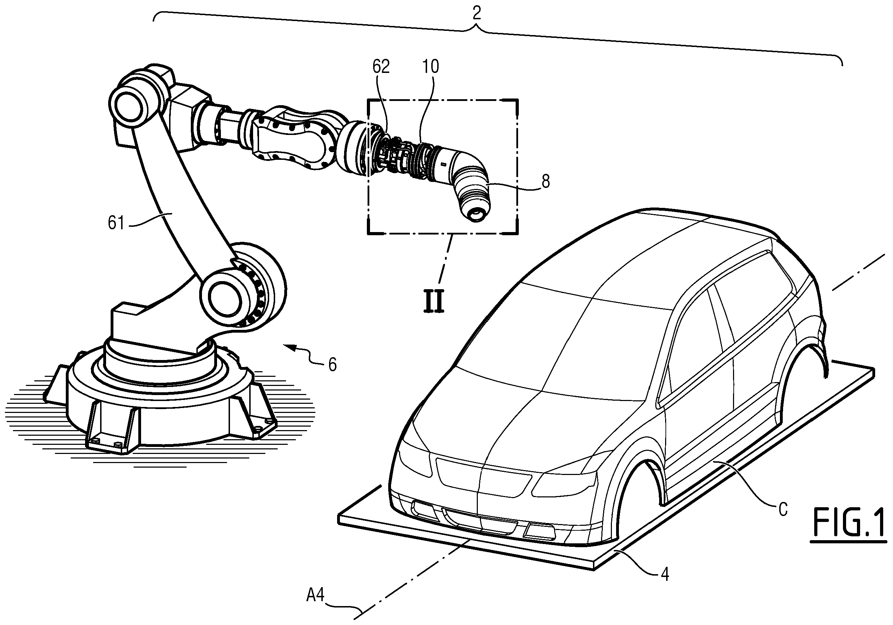

L'installation 2 représentée sur la figure 1 sert à appliquer un produit de revêtement, tel qu'un apprêt, une peinture ou un vernis, sur une carrosserie C de véhicule automobile déplacée par un convoyeur 4 le long d'un axe de convoyage A4. L'installation 2 comprend plusieurs robots, dont un seul est représenté sur la figure 1 avec la référence 6. Le bras 61 de chaque robot 6 porte un pulvérisateur 8 de produit de revêtement, conforme à l'invention. Plus précisément, chaque pulvérisateur 8 est monté sur un poignet 62 qui constitue l'extrémité du bras 61 d'un robot 6.

En pratique, et selon un aspect de l'invention qui n'est pas représenté, les robots 6 sont repartis le long de l'axe de convoyage A4, de part et d'autre du convoyeur 4.

Comme visible à la figure 1, le robot 6 est de type robot multiaxe. En variante, ce robot peut être d'un autre type, notamment de type réciprocateur.

A la figure 1, l'échelle des objets représentés n'est pas respectée. L'échelle du robot 6 et du pulvérisateur 8 est agrandie par rapport à celle de la carrosserie C.

Le pulvérisateur 8 est de type rotatif et comprend un corps principal 82, formé de deux parties 84 et 86, qui définissent respectivement un premier axe longitudinal A84 et un deuxième axe longitudinal A86, ces axes étant non parallèles.

En variante, les axes longitudinaux A84 et A86 sont parallèle, voire confondus.

Le pulvérisateur 8 comprend également un bol 88 monté rotatif autour de l'axe A84 et entrainé en rotation au moyen d'une turbine non représentée, qui est avantageusement du type turbine à air, et qui est supportée par la partie 84 du corps 82. Le bol 88 constitue un organe de pulvérisation du pulvérisateur 8 qui est ici de type rotatif.

Dans cet exemple, le pulvérisateur 8 est de type électrostatique et est associé à une unité haute tension non représentée qui lui fournit une tension continue de l'ordre de -60 kV permettant de charger électrostatiquement le produit de revêtement pulvérisé par le bol 88 entrainé en rotation autour de l'axe A84.

Le type du pulvérisateur 8 n'est pas limitatif. En variante, le pulvérisateur 8 est dépourvu de bol, c'est-à-dire n'est pas de type rotatif, et comprend une ou plusieurs buses qui constituent autant d'organes de pulvérisation. Selon une autre variante, le pulvérisateur 8 n'est pas de type électrostatique. Selon encore une autre variante, le pulvérisateur 8 est un pistolet manuel.

Le pulvérisateur 8 comprend un dispositif 90 d'alimentation du bol 88 en produit de revêtement et en produit de nettoyage qui est intercalé entre la partie 86 du corps 82 et le poignet 62 du robot 6.

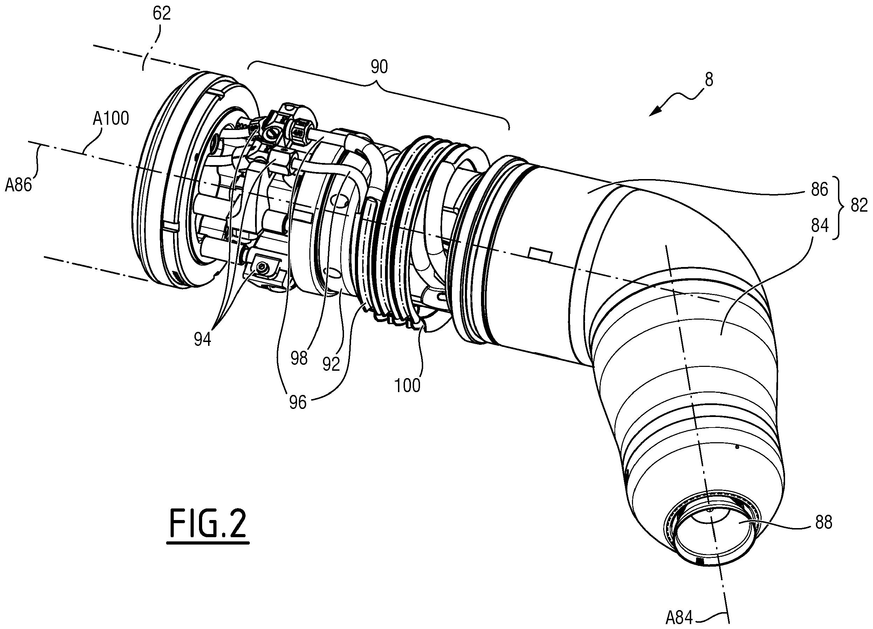

Le pulvérisateur 8 comprend également un capot, non représenté, qui protège le dispositif d'alimentation 90, notamment vis-à-vis des projections de produit de revêtement. Ce capot est omis sur les figures 1 et 2, afin de faciliter la visualisation des éléments constitutifs du dispositif d'alimentation 90. Ce capot est tubulaire, avec une section analogue aux formes extérieures du poignet 62 et du corps 86.

Ce dispositif d'alimentation 90 comprend un corps central 92, secondaire par rapport au corps 82, et plusieurs raccords, dont certains sont visibles à la figure 2 avec la référence 94 et qui permettent de brancher des tuyaux flexibles dont deux sont visibles sur cette même figure 2 avec les références 96 et 98. A la figure 2, une partie du tuyau 96 est représentée par un trait d'axe. L'embouchure de chacun des tuyaux flexibles 96 et 98 est raccordées sur un raccord 94. L'orifice de sortie de chacun des tuyaux flexibles 96 et 98 est raccordé sur un raccord monté sur la partie 86 du corps principal 82.

Par « flexible » on entend que les tuyaux 96 et 98 peuvent se déformer élastiquement en sous l'effet d'une action de cintrage effectuée à la main par un utilisateur. En pratique, ces tuyaux peuvent être réalisés dans un matériau synthétique tel que du polytétrafluoroéthylène ou PTFE, qui présente des propriétés de rinçabilité et de coefficient de frottement satisfaisantes vis-à-vis des produits fluides qui doivent alimenter le bol 88. A titre d'exemple non limitatif, les tuyau 96 et 98 peuvent avoir un diamètre interne de 4 millimètre (mm) et une épaisseur de paroi de 1 mm.

À l'intérieur du volume défini par le capot autour du dispositif d'alimentation 90, chaque tuyau 96 et 98 s'étend entre deux raccords 94 et équivalent, avec une longueur strictement Lg supérieure à la distance entre ces raccords, cette distance étant mesurée parallèlement à l'axe A86, cette longueur Lg étant suffisante pour créer une zone d'isolation électrique entre ces deux raccords, lorsque le volume intérieur de ce tuyau a été purgé.

En pratique, chaque portion de maintien 106 ou 116 présente une longueur développée, c'est-à-dire une longueur mesurée selon l'enchainement de spires formé par cette portion de maintien, qui est supérieure ou égale à 80 cm, de préférence supérieure ou égale à 100 cm.

Dans un exemple de pulvérisateur, la distance d94 entre les raccords 94 et équivalents, mesurée parallèlement à l'axe A86 ne peut excéder les 102 mm. En entrée et sortie des tuyaux flexibles 96 et 98, ceux-ci doivent présenter une portion rectiligne d'au moins 25 mm pour leur raccordement. D'autre part, la longueur totale Lg des tuyaux flexibles 96 et 98 est d'une centaine de cm, en tenant compte de la résistivité du produit à pulvériser. Dans l'exemple des figures et en tenant compte de la résistivité du produit à pulvériser, la longueur Lg est d'environ 120 cm. En pratique, chaque tuyau 96 ou 98 forme une spirale à plusieurs enroulements autour du corps central 92. Ces enroulements ou spires ne doivent pas être pas jointifs pour éviter un rampage électrique entre eux.

Afin de garantir le bon positionnement de chaque tuyau 96 et 98 au sein du pulvérisateur 8, un guide de conformation 100 est monté autour du corps central 92 et prévu pour définir un cheminement de chacun de ces tuyaux entre les raccords 94 et équivalent sur lesquels ils sont branchés.

Sur toute sa trajectoire, chaque tuyau flexible 96 ou 98 ne doit pas réaliser de virage avec un rayon de courbure inférieur à 30 mm et chaque changement de direction doit impérativement être tangent avec les parties adjacentes du tuyau. Chaque spire ne fait que s'éloigner du point de départ. Les spires formées par chaque tuyau sont distantes l'une de l'autre, avec un entraxe de 8mm, et ne laissent jamais le flexible être au contact d'un autre flexible ni même de lui-même. Le guide assure la répétabilité de toutes ces contraintes et respecte l'intégrité du flexible.

La forme conférée par le guide de conformation 100 aux tuyaux flexibles 96 et 98 permet à chacun d'entre eux d'assurer une isolation électrique entre son embouchure et son orifice de sortie, y compris lorsqu'il est rempli de produit fluide de revêtement à pulvériser.

Le guide de conformation 100 est une pièce monobloc en matériau synthétique électriquement isolant, par exemple en polyamide, notamment de type PA 12.

De préférence, le guide de conformation 100 est réalisé par fabrication additive, en impression 3D. Un tel procédé de fabrication additive peut, par exemple, être un procédé de fabrication par fusion à jets multiples ou MJF (de l'Anglais « Multi Jet Fusion »). Un tel procédé permet d'optimiser l'encombrement du guide de conformation 100 et est compatible avec sa forme gauche. En effet la forme du guide conformation 100 le rend très difficile, voire impossible, à mouler ou à usiner.

Le mode de fabrication et le matériau constitutif du guide de conformation 100 lui confèrent une rigidité plus importante que celle des tuyaux 96 et 98.

Compte tenu de son mode de fabrication, des ouvertures longitudinales doivent être prévues dans le guide de conformation 100 pour évacuer la poudre en excès lors de la fabrication.

On note A100 un axe longitudinal et central du guide de conformation 100.

Le guide de conformation 100 comprend un coude d'entrée 102 pour le tuyau 96, qui permet de faire passer ce tuyau d'une orientation globalement parallèle à l'axe A100 à une orientation globalement orthoradiale à cet axe. À l'opposé de son embouchure 104 le coude 102 débouche dans une première portion de maintien 106 qui est en forme de spirale centrée sur l'axe longitudinal et central A100 et qui présente, en section dans un plan radial à l'axe A100, une forme de U arrondie, avec sa base 107 tournée vers l'axe A100. La surface interne de la première portion de maintien 106 est à section globalement circulaire, avec un diamètre égal ou légèrement supérieur, à moins de 5% près, au diamètre extérieur nominal du tuyau 96.

En variante, le diamètre de la section interne de la première portion de maintien 106 est supérieur d'environ 25% au diamètre extérieur nominal du tuyau 96.

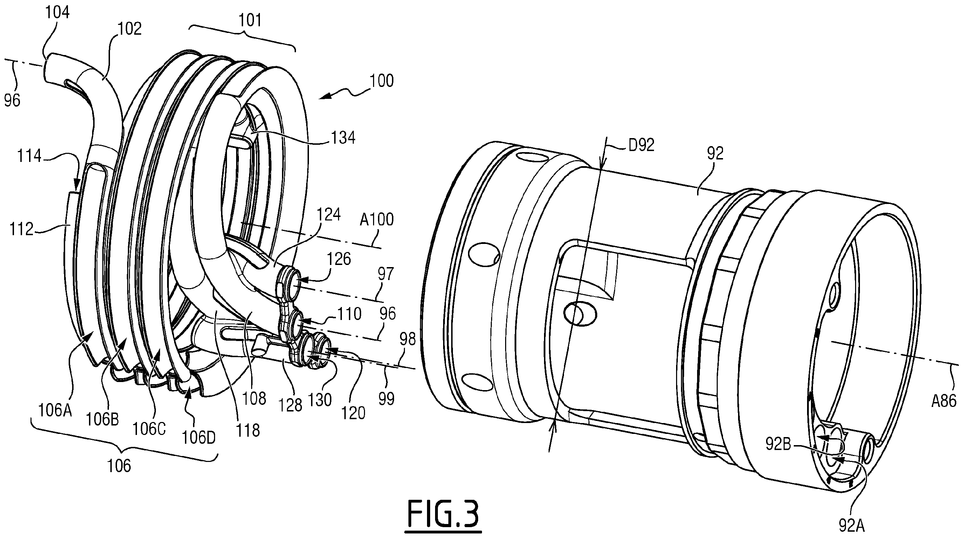

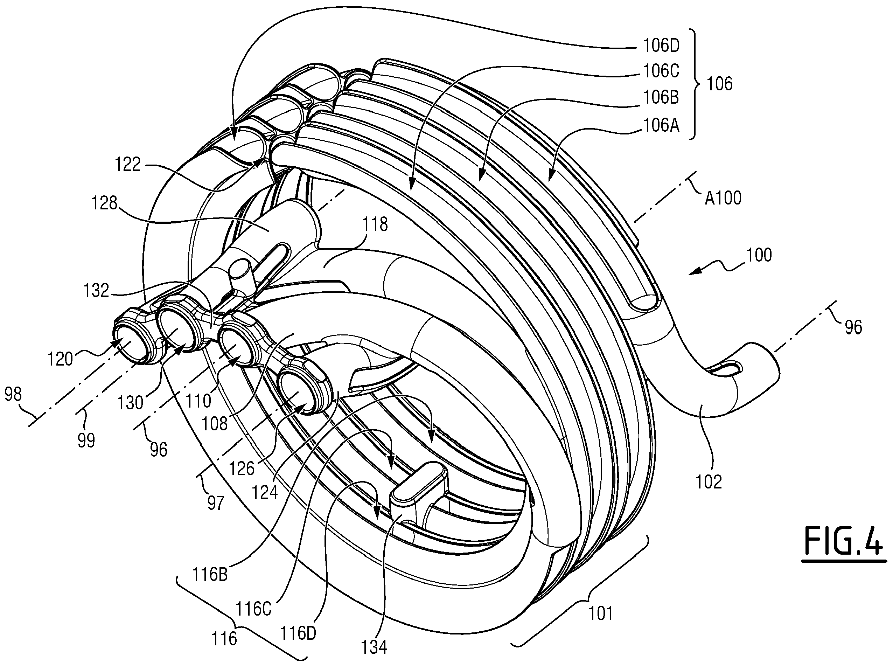

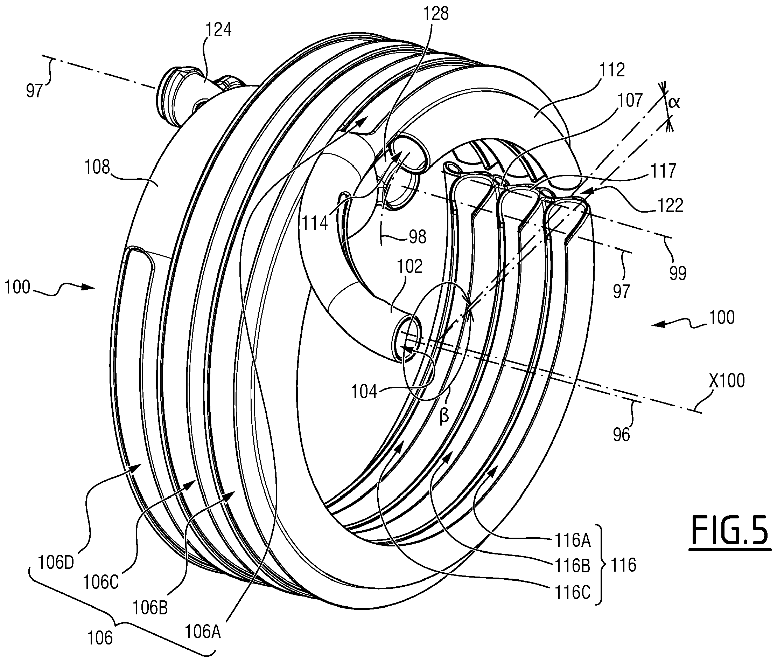

A la figure 2, le tronçon du tuyau flexible représenté par un trait d'axe est celui qui est en place dans la portion de maintien 106. Le tuyau flexible 96 est partiellement représenté par un trait d'axe sur les figures 3 à 5, en dehors du guide de conformation 100.

À l'opposé du coude 102, la première portion de maintien 106 se raccorde sur un coude de sortie 108 dont le débouché 110 est orienté vers la partie 86 du corps 82. Le coude 108 permet de faire passer le tuyau 96 d'une orientation orthoradiale à une orientation parallèle à l'axe A100.

Le guide de conformation 100 comprend un tube d'entrée 112 pour le tuyau 98, dont on note 114 l'embouchure et qui débouche, à l'opposé de cette embouchure, dans une deuxième portion de maintien 116 qui est également en forme de spirale centrée sur l'axe A100 et qui présente, en section dans un plan radial à l'axe A100, une forme de U avec sa base 117 opposé à l'axe A100.

Le tuyau flexible 98 est partiellement représenté par un trait d'axe sur les figures 3 à 5, en dehors du guide de conformation 100.

Dans cet exemple de réalisation, les sections en U des deux portions de maintien 106 et 116 ont leurs ouvertures longitudinales orientées à l'opposée l'une de l'autre, à savoir, pour la première portion de maintien 106, radialement vers l'extérieur par rapport à l'axe A100, c'est-à-dire selon une direction radiale centrifuge par rapport à sa base 107, et, pour la deuxième portion de maintien 116, radialement vers l'intérieur par rapport à l'axe A100, c'est-à-dire selon une direction radiale centripète par rapport à sa base 117.

Ces ouvertures longitudinales sont nécessaires pour évacuer la poudre en excès lors de la réalisation du guide de conformation 100 par fabrication additive. Ces ouvertures longitudinales ont pour conséquence que les portions de maintien 106 et 116 n'entourent pas les tuyaux 96 et 98 sur toute leur circonférence.

Avantageusement, la deuxième portion de maintien 116 est disposée, radialement à l'axe A100, à l'intérieur de la première portion de maintien 106.

Avantageusement, la base 107 de la première portion de maintien 106 est adjacente à la base 117 de la deuxième portion de maintien 116.

La deuxième portion de maintien 116 se prolonge, du côté du corps 86, par un coude de sortie 118 dont le débouché 120 est orienté parallèlement au débouché 110. Le coude 118 permet de faire passer le tuyau 98 d'une orientation orthoradiale à une orientation parallèle à l'axe A100.

Les deux portions de maintien 106 et 116 forment ensemble, entre les éléments d'entrée 102 et 112, et les éléments de sortie 108 et 118, une partie quasi-annulaire 101 du guide de conformation 100, qui s'étend selon l'axe A100 et qui entoure cet axe.

Cette partie 101 du guide de conformation 100 n'est pas complètement annulaire dans la mesure où elle est interrompue par une fente longitudinale 122 qui s'étend sur toute la longueur de cette partie 101 et qui est parallèle à l'axe A100.

Il en résulte que la première portion de maintien 106 est divisée en quatre segments de portion de maintien 106A, 106B, 106C, 106D qui forment ensemble plusieurs spires autour de l'axe A100. Le segment 106A s'étend entre le coude 102 et la fente 122. Le segment 106B prolonge le segment 106A au-delà de la fente 122 et revient jusqu'à cette fente. Le segment 106C prolonge le segment 106B au-delà de la fente 122 et revient vers cette fente. Le segment 106D prolonge le segment 106C au-delà de la fente 122 et se termine dans le coude 108.

De la même façon, la fente 122 divise la deuxième portion de maintien 116 en quatre segments 116A, 116B, 116C et 116D qui se suivent entre le tube 112 et le coude 118, de part de d'autre de la fente 122, et qui forment ensemble plusieurs spires autour de l'axe A100.

En coupe transversale, c'est-à-dire en coupe dans un plan radial à l'axe A100, chaque portion de maintien 106 et 116 présente une forme intérieure concave qui entoure le tuyau 96 ou 98 sur plus de la moitié de sa circonférence. Ceci peut être obtenu par une forme en arc de cercle ou en U, qui s'étend sur un secteur angulaire d'angle au sommet supérieur ou égal à 185°.

D'autre part, compte tenu des ouvertures longitudinales des portions de maintien 106 et 116, qui s'étendent sur toute leur longueur, la forme intérieure concave de chaque portion de maintien 106 et 116 entoure le tuyau 96 ou 98 sur une partie seulement de sa circonférence. En d'autre termes, les tuyau 96 et 98 ne sont pas totalement recouverts par les portions de maintien 106 et 116.

Les segments 106A, 106B, 106C et 106D de la première portion de maintien 106 sont séparés les uns des autres, selon une direction parallèle à l'axe A100, par les branches latérales de la section en U de cette portion de maintien. Ainsi, les enroulements ou spires formés par le tronçon du tuyau 96 en place dans la première section de maintien 106 sont non jointifs, ce qui évite les risques de rampage électrique. De la même façon, les branches latérales de la section en U des segments 116A, 116B, 116C et 116D de la deuxième portion de maintien 116 permettent de maintenir non jointifs les enroulements ou spires formés par le tronçon du tuyau 98 en place dans cette portion.

La fente 122 confère une souplesse au guide de conformation 100 qui facilite sa mise en place autour du corps central 92. En effet, il est possible d'écarter l'un de l'autre les bords de la fente 122 d'une distance supérieure au diamètre minimum D92 du corps central 92, afin d'engager le guide de conformation 100 autour de ce corps, selon une direction radiale à l'axe A86, ce qui fait passer les pièces 92 et 100 de la configuration de la figure 3 à la configuration de la figure 2, où les axes A86 et A100 sont superposés.

En variante non représentée de l'invention, les axes A86 et A100 sont parallèles sans être confondus lorsque le guide de conformation est monté autour du corps 92.

Le guide de conformation 100 comprend également un premier élément tubulaire 124 dont le débouché 126 est orienté comme le débouché 110 du coude 108. Le premier élément annulaire 124 permet de guider un tuyau 97, représenté par un trait d'axe sur les figures 3 à 5, à l'extérieur du guide de conformation 100, qui est du même type que les tuyaux 96 et 98 et qui s'étend entre les raccords 94 et le corps 86, selon une direction globalement parallèle à l'axe A86. L'élément tubulaire 124 est orienté de façon à être accessible à travers la partie 101 du guide de conformation, c'est-à-dire radialement à l'intérieur des portions de maintien 106 et 116. Ce premier élément tubulaire 124 permet donc de guider et de maintenir localement le tuyau flexible 97 qui circule, radialement à l'axe A86 et à l'axe A100, entre le corps central 92 et la portion de maintien 116, le long de la partie quasi-annulaire 101 du guide de conformation 100.

Le guide de conformation 100 comprend un deuxième élément tubulaire 128 dont le débouché 130 est orienté comme le débouché 110 du coude 108.

Le deuxième élément tubulaire 128 a une fonction analogue à celle du premier élément tubulaire 124 et permet de guider et de maintenir localement un autre tuyau 99, représenté par un trait d'axe sur les figures 3 à 5, en dehors du guide de conformation 100, qui est du même type que les tuyaux 96 et 98 et qui s'étend entre les raccords 94 et le corps 86, selon une direction globalement parallèle à l'axe A86. Le tuyau 99 circule, radialement à l'axe A86 et à l'axe A100, entre le corps central 92 et la deuxième portion de maintien 116, le long de la partie quasi-annulaire 101 du guide de conformation 100.

Les tuyaux flexibles 97 et 99 sont avantageusement réalisés dans le même matériau et avec la même section que les tuyaux 96 et 98. Ceci n'est toutefois pas obligatoire car les tuyaux 97 et 99 peuvent être prévus pour faire circuler des fluides différents de ceux qui circulent dans les tuyaux 96 et 98, car ils n'ont pas la même longueur et car ils n'ont pas à former des enroulements.

Une fois le guide de conformation 100 en place sur le corps central 92, les débouchés 110, 120, 126 et 130 sont alignés sur des orifices traversant prévus sur le corps central 92 et dont deux sont visibles à la figure 3, avec les références 92A et 92B.

Une bride 132 relie les coudes 108 et 118 et les éléments tubulaires 124 et 128. Cette bride 132 permet de rigidifier localement le guide de conformation 100 et d'assurer un positionnement relatif des tuyaux flexibles 96, 97, 98 et 99 sortant de ces différentes parties. En pratique, les tuyaux flexibles 96, 97, 98 et 99 sortant des coudes 108 et 118 et des éléments tubulaires 124 et 128 sont parallèles à l'axe A100, ce qui facilite leur branchement sur des raccords montés sur le corps 86 et non visible sur les figures.

Le guide de conformation 110 comprend également un plot 134 d'encrage sur le corps central 92. À cet effet, le corps central 92 est pourvu d'un logement non représenté de réception du plot 134, ce qui permet une immobilisation relative des parties 92 et 100 du pulvérisateur 8, après mise en place du guide de conformation 100 autour du corps central 92.

Avantageusement, le plot 134 est prévu radialement à l'intérieur de la partie quasi-annulaire 101, à l'opposé, par rapport à l'axe A100, de la zone de passage des tuyaux flexibles 97 et 99, afin de ne pas interférer avec ces tuyaux.

Lors de la fabrication du pulvérisateur 8 ou lors d'une opération de maintenance, s'il est nécessaire de monter pour la première fois ou de changer l'un des tuyaux 96 ou 98, l'opérateur introduit le nouveau tuyau flexible dans une des embouchures 104 ou 114 et le pousse à travers l'une des zones de maintien 106 ou 116 jusqu'à le faire ressortir du guide de conformation 100 par l'un des débouchés 110 ou 120. Cette opération a pour effet de conformer automatiquement un tronçon du tuyau en question qui se situe dans la portion de maintien 106 ou 116, avec un rayon de courbure imposé par cette portion de maintien et compatible avec une circulation bien maitrisée du fluide dans ce tuyau. Ce fluide peut être un produit de revêtement liquide ou sous la forme d'un mélange d'air et de poudre ou un produit de nettoyage liquide ou diphasique. Lors de cette étape de fabrication du pulvérisateur 8, les tuyaux 96 et 98 ne risquent pas de sortir des portions de maintien 106 et 116 à travers leurs ouvertures longitudinales à cause de la forme intérieure de ces portions de maintien. En effet, comme cette forme intérieure entoure les tuyaux 96 et 98 sur plus de la moitié de leur circonférence, le tuyau 96 ne risque pas d'être éjecté de la portion de maintien 106, radialement vers l'extérieur par rapport à l'axe A100, alors que le tuyau 98 ne risque pas d'être éjecté de la portion de maintien 116, radialement vers l'intérieur par rapport à l'axe A100. Un opérateur ne risque donc pas de blesser les tuyaux 96 et 98 au montage et la reproductibilité du montage est amélioré par le guide de conformation 100 qui impose à lui seul et de façon pérenne la géométrie des tuyaux 96 et 98 dans le pulvérisateur 8.

De même, lors de la fabrication du pulvérisateur 8, ou lors d'une opération de maintenance s'il est nécessaire de monter pour la première fois ou de changer l'un des tuyaux 97 ou 99, l'opérateur introduit le nouveau tuyau flexible dans l'un des éléments tubulaires 124 ou 128, en les disposant, radialement à l'axe A100, à l'intérieur de la partie quasi-annulaire 101, avec une orientation globalement parallèle à l'axe A100.

Une fois les différents tuyaux montés sur le guide de conformation 100, celui-ci peut être mis en place sur le corps central 92, en écartant les bords de la fente 122, comme expliqué ci-dessus, puis en engageant le plot 134 dans le logement correspondant prévu sur le corps central 92.

En pratique, le guide de conformation 100 est, de préférence, installé autour du corps secondaire avant montage des tuyaux 96 à 99 sur le guide de conformation.

Quel que soit l'ordre choisi, au terme du montage, les axes A86 et A100 sont alors parallèles ou confondus et le guide de conformation 100 est orienté autour de l'axe A86 grâce à la coopération du plot 134 et du logement correspondant du corps central 92, de telle sorte que ces embouchures 104 et 114 sont correctement positionnées par rapport aux raccords 94, alors que les débouchés 110, 120, 126 et 130 sont correctement positionnés par rapport aux orifices 92A, 92B et équivalents.

En particulier, chaque tuyau flexible 96 et 98 a une trajectoire bien définie avec des rayons de courbure imposés minimum, définis par le guide de conformation 100, compatibles avec l'écoulement du fluide. Les tuyau flexible 97 et 99 ont également une trajectoire bien définie entre les raccords sur lesquels ils sont branchés.

En particulier, le diamètre interne de chaque tuyau flexible 96 ou 98 est conservé sur toute la longueur de ces tuyaux, puisqu'il n'y a pas de risque de pincement des tuyaux grâce à la forme imposée par le guide de conformation 100. La circulation du fluide est ainsi fiabilisée.

En pratique, la longueur totale Lg des tuyaux 96 et 98, mesurée entre les raccords 94 et équivalent, dépend de la longueur développée des portions de maintien 106 et 116.

Avantageusement, compte tenu de la géométrie du guide de conformation 100, un rapport R entre la longueur Lg de l'un des tuyaux 96 et 96 et la distance d94 est strictement supérieur à 1. En pratique, ce rapport est, de préférence, supérieur ou égal à 5, de préférence encore supérieur ou égal à 10.

Dans l'exemple des figures ce rapport vaut environ R = 1200/102 = 11.76

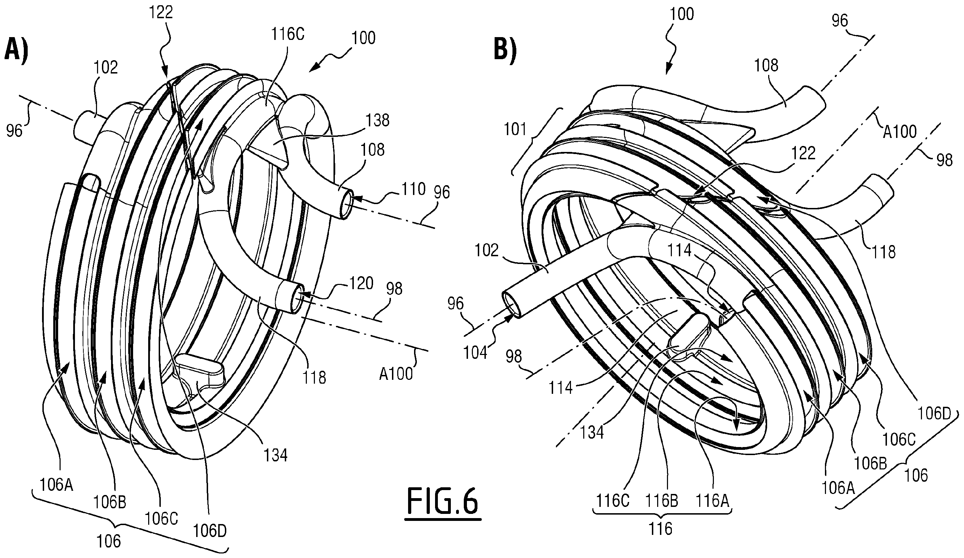

Dans le deuxième mode de réalisation de l'invention représenté à la figure 6, les éléments analogues à ceux du premier mode de réalisation portent la même référence. Si une partie du guide de conformation 100 de ce deuxième mode de réalisation est mentionnée dans la description sans être représentée sur les figures, il s'agit de la même partie que celle mentionnée pour le premier mode de réalisation. À l'inverse, si une partie est référencée à la figure 6 sans être mentionnée dans description, il s'agit de la même partie que celle portant la même référence dans le premier mode de réalisation. Dans ce qui suit, on décrit principalement ce qui différencie le deuxième mode de réalisation du premier mode de réalisation.

Dans ce deuxième mode de réalisation, la fente longitudinale 122 n'est pas parallèle à l'axe longitudinal A100 du guide de conformation mais orientée obliquement par rapport à celui-ci. Cette fente annulaire s'étend sur toute la longueur de la partie quasi-annulaire 101 formée des portions de maintien 106 et 116. Elle divise en quatre segments 106A, 106B, 106C et 106D la première portion de maintien 106 et en trois segments 116A, 116B et 116C la deuxième portion de maintien 116.

Un coude 102 avec une embouchure 104 est prévu à l'entrée de la première portion de maintien 116. L'embouchure 114 est prévue directement à l'entrée de la portion de maintien 116, sans utilisation d'un tube d'entrée comparable au tube 112 du premier mode de réalisation.

La première portion de maintien 106 est à section en U avec son ouverture orientée selon une direction centrifuge par rapport à l'axe A100, comme dans le premier mode de réalisation. La deuxième portion de maintien 116 est à section en C, avec son ouverture orientée selon une direction centripète par rapport à l'axe A100.

Il n'est pas prévu d'élément tubulaire comparable aux éléments tubulaires 124 et 128 du premier mode de réalisation. En d'autres termes, si des tuyaux flexibles circulent radialement à l'intérieur des portions de maintien 106 et 116, autour du corps central 92, ils ne sont pas maintenus en position par le guide de conformation 100.

Le guide de conformation 100 est dépourvu de bride. Les extrémités libres des coudes 108 et 118 qui définissent les débouchés 110 et 120 peuvent donc être librement positionnées, l'une par rapport à l'autre et vis-à-vis du corps central 92, notamment de ses orifices 92A et 92B. Un renfort de rigidification 138 est prévu entre les bases respectives des coudes 108 et 118.

Dans ce mode de réalisation également, en coupe transversale, c'est-à-dire en coupe dans un plan radial à l'axe A100, chaque portion de maintien 106 et 116 présente une forme intérieure concave qui entoure le tuyau 96 ou 98 sur plus de la moitié de sa circonférence. Ceci peut être obtenu par une forme en arc de cercle ou en U, qui s'étend sur un secteur angulaire d'angle au sommet supérieur ou égal à 185°.

Dans ce deuxième mode de réalisation, un rapport R défini comme dans le premier mode de réalisation, est strictement supérieur à 1, de préférence supérieur ou égal à 5, de préférence encore supérieur ou égal à 10.

Quel que soit le mode de réalisation, en configuration de repos, c'est-à-dire en l'absence d'effort extérieur exercé sur le guide de conformation 100, la fente 122 a une largeur inférieure ou égale à 8 mm, de préférence inférieure ou égale à 5 mm, de sorte qu'elle s'étend sur un secteur angulaire, par rapport à l'axe A100, d'angle au sommet α inférieur à 5°. Ainsi, dans cet exemple, les deux portions de maintien 106 et 116 entourent l'axe A100 sur un secteur angulaire d'angle au sommet supérieur ou égal à 355º. En pratique, en jouant sur la largeur de la fente 122, on peut concevoir le guide de conformation 100 de telle sorte que, en configuration de repos, les portions de maintien 106 et 116 entourent l'axe A100 sur au moins 330°, de préférence sur au moins 345°, de préférence encore sur au moins 351°, ce qui évite que les tuyaux flexibles suivent des trajectoires non-circulaires et/ou non-tangentes aux première et deuxième portions de maintien 106 et 116.

Quel que soit le mode de réalisation et selon un aspect de l'invention qui n'est pas visible sur les figures, le pulvérisateur 8 comprend un système de circulation, à l'intérieur de l'un au moins des tuyaux 96 et 98, d'une navette non représentée, qui est parfois appelée racleur et qui, en étant poussée par un fluide, permet de purger ce ou ces tuyaux lorsque cela est nécessaire. Ce système peut faire usage de la technique décrite dans WO-A-2021/009046. La forme conférée aux tuyaux 96 et 98 par les parties de maintien 106 et 116, par les éléments d'entrée 102 et 112 et par les éléments de sortie 108 et 118 est compatible avec le passage de cette navette. En particulier le rayon de courbure minimum des tronçons de chacun des tuyaux 96 et 98 en place dans les portions de maintien 106 et 116 et le rayon de courbure minimum des parties de ces tuyaux en place dans les coudes 102, 108 et 118 sont choisis supérieurs ou égaux à un rayon de courbure minimal pour que la navette puisse circuler dans le tuyau, ce qui évite tout risque de coincement de la navette. La circulation de la navette est ainsi fiabilisée.

Ainsi, quel que soit le mode de réalisation, le guide de conformation 100 permet de maintenir en position les tronçons des tuyaux 96 et 98 disposés dans des portions de maintien 106 et 116, avec une géométrie prédéterminée, compatible avec un bon écoulement de fluide à l'intérieur de ces tuyaux et avec le passage éventuel d'une navette permettant de purger ces tuyaux.

Selon une variante non représentée de l'invention, le nombre de portions de maintien du guide de conformation de l'invention peut être différent de deux, en particulier égal à un ou supérieur ou égal à trois.

Selon une autre variante non représentée, la fente peut diviser la ou les portions de maintien en un nombre de segments différents de ceux représentés sur les figures, en fonction du nombre d'enroulements prévus pour les spirales formées par ces portions de maintien.

Selon une autre variante non représentée de l'invention, lorsque le guide de conformation comprend au moins deux portions de maintien, celles-ci peuvent être disposées au même niveau radial par rapport à l'axe A100, et non pas radialement l'une à l'intérieur de l'autre, comme dans les exemples des figures.

Selon une autre variante non représentée de l'invention, le guide conformation peut comprendre un nombre d'éléments tubulaires de guidage et de maintien localisé de tuyau différent de zéro ou de deux, par exemple égal à un ou à trois.

En variante, les portions de maintien sont des portions tubulaires à section fermée, et non pas à section en U ou en C.

En variante, le relief formé par le plot 134 n'est pas un relief en saillie, comme sur les exemples des figures, mais un relief en creux, notamment un logement, et le corps central 92 est pourvu d'un relief en saillie de forme correspondante.

Les modes de réalisation et variantes envisagés ci-dessus peuvent être combinés pour générer de nouveaux modes de réalisation de l'invention.

## Revendications

1. Guide de conformation (100) d'au moins un tuyau (96, 98) d'alimentation en produit fluide d'un organe de pulvérisation (88) appartenant à un pulvérisateur (8) de produit de revêtement, **caractérise en ce que** ce guide est configuré pour être monté autour d'un corps central (92) du pulvérisateur et comprend au moins une portion de maintien (106, 116) en forme de spirale pour le maintien en position d'un tronçon du tuyau d'alimentation (96, 98), avec une géométrie prédéterminée, configurée pour assurer une isolation électrique entre une embouchure et un orifice de sortie du tuyau d'alimentation et **en ce que** chaque portion de maintien (106, 116) présente, en coupe transversale, une forme intérieure concave configurée pour entourer le tronçon de tuyau (96, 98) sur plus de la moitié de sa circonférence, de préférence une forme en arc de cercle ou en U qui s'étend sur un secteur angulaire d'angle au sommet supérieur ou égal à 185°.

2. Guide de conformation selon la revendication 1, **caractérisé en ce qu'**il comprend au moins deux portions (106, 116) de maintien en position de deux tronçons de tuyau distincts (96, 98).

3. Guide de conformation selon la revendication 2, caractérisé en ce les deux portions de maintien sont centrées sur un axe commun (A100).

4. Guide de conformation selon l'une des revendications précédentes, **caractérisé en ce qu'**il comprend des coudes d'entrée et de sortie (102, 108, 118) qui permettent de faire passer un tuyau d'une orientation globalement parallèle à l'axe commun (A100) à une orientation globalement othoradiale à cet axe, ou l'inverse.

5. Guide de conformation selon l'une des revendications précédentes, **caractérisé en ce qu'**il comprend une bride (132) de positionnement d'au moins un élément de sortie (108, 118) d'une portion de maintien en position (106, 116).

6. Guide de conformation selon l'une des revendications précédentes, **caractérisé en ce qu'**il comprend une partie (101) quasi-annulaire, qui s'étend selon un axe longitudinal (A100) et qui présente une fente longitudinale (122) et **en ce que**, en configuration de repos du guide de conformation, la partie quasi-annulaire entoure cet axe longitudinal sur strictement moins de 360° et sur au moins 330°, de préférence sur au moins 345°, de préférence encore sur au moins 351°.

7. Guide de conformation selon l'une des revendications précédentes, **caractérisé en ce qu'**il est réalisé par fabrication additive.

8. Guide de conformation selon l'une des revendications précédentes, **caractérisé en ce que** chaque portion de maintien (106, 116) comprend plusieurs spires.

9. Guide de conformation selon l'une des revendications précédentes, **caractérisé en ce que** chaque portion de maintien (106, 116) présente une longueur développée supérieure ou égale à 80 cm, de préférence supérieure ou égale à 100 cm.

10. Pulvérisateur de produit de revêtement comprenant un organe de pulvérisation (88) et au moins un tuyau (96, 98) d'alimentation de l'organe de pulvérisation en produit de revêtement à pulvériser et/ou en produit de nettoyage, **caractérisé en ce qu'**il comprend un guide (100) de conformation du tuyau (96, 98) selon l'une des revendications précédentes et **en ce qu'**un tronçon du tuyau est engagé dans, et maintenu en position avec une géométrie prédéterminée par, la portion de maintien en position (106, 116) du guide de conformation.

11. Pulvérisateur selon la revendication 10, **caractérisé en ce qu'**il comprend un corps central (92) et **en ce que** le guide de conformation (100) est monté autour du corps central.

12. Pulvérisateur selon la revendication 11, **caractérisé en ce que** le guide de conformation (100) est équipé d'au moins un relief (134) de positionnement sur le corps central et/ou sur une autre partie (86) du pulvérisateur.

13. Pulvérisateur selon l'une des revendication 10 à 12, **caractérisé en ce que** le pulvérisateur est équipé d'une navette circulant dans le tuyau et **en ce que** la portion (106, 116) de maintien en position du tronçon du tuyau d'alimentation (96, 98) est configurée pour qu'un rayon de courbure du tuyau en place sur le guide soit, sur toute la longueur du tuyau, supérieur ou égal à un rayon de courbure minimal pour que la navette puisse circuler dans le tuyau.

14. Pulvérisateur selon l'une des revendications 10 à 13, **caractérisé en ce qu'**un rapport (R) entre,
- d'une part, une longueur (Lg) du tuyau d'alimentation (96, 98) entre des raccords (94) de branchement de ce tuyau dans le pulvérisateur et,
- d'autre part, une distance, mesurée parallèlement à un axe longitudinal (A86) d'une partie (86) d'un corps principal (82) du pulvérisateur, entre les raccords
est strictement supérieur à 1, de préférence supérieur ou égal à 5, de préférence encore supérieur ou égal à 10.

15. Installation (2) d'application de produit de revêtement incluant un pulvérisateur (8) comprenant un tuyau d'alimentation en produit de revêtement et/ou en produit de nettoyage, **caractérisée en ce que** le pulvérisateur est selon l'une des revendications 7 à 10.
